(19) Europäisches Patentamt

European Patent Office

Office européen des brevets

(11) Veröffentlichungsnummer: **0 289 705 B1**

(12) **EUROPÄISCHE PATENTSCHRIFT**

(45) Veröffentlichungstag der Patentschrift: **24.06.92**

(21) Anmeldenummer: **88101576.2**

(22) Anmeldetag: **04.02.88**

(51) Int. Cl.5: **H01M 6/06**

(54) **Bei hoher Temperatur entladbares galvanisches Primärelement mit alkalischem Elektrolyten.**

(30) Priorität: **02.05.87 DE 3714654**

(43) Veröffentlichungstag der Anmeldung:
**09.11.88 Patentblatt 88/45**

(45) Bekanntmachung des Hinweises auf die
Patenterteilung:
**24.06.92 Patentblatt 92/26**

(84) Benannte Vertragsstaaten:
**BE CH DE ES FR GB GR IT LI SE**

(56) Entgegenhaltungen:
**FR-A- 1 063 338**
**FR-A- 2 392 502**
**FR-A- 2 421 475**
**US-A- 2 970 180**

**ELECTROCHEMICAL TECHNOLOGY, Band 3,
Nr. 1-2, Januar-Februar 165, Seiten 58-60, US;
M.G. KLEIN et al.: "A new long wet-shelf life
primary battery system"**

**PATENT ABSTRACTS OF JAPAN, Band 6, Nr.
107 (E-113)[985], 17. Juni 1982; & JP-A-57 36
782 (CITIZEN TOKEI K.K.) 27-02-1982**
(73) Patentinhaber: **VARTA Batterie Aktiengesellschaft**
**Am Leineufer 51**
**W-3000 Hannover 21(DE)**

(72) Erfinder: **Hennrich, Rolf**
**Frankenstrasse 20**
**W-7090 Elwangen(DE)**
Erfinder: **Nientiedt, Heinz-Werner, Dr.
Dipl.-Chem.**
**Einsteinstrasse 46**
**W-7090 Elwangen(DE)**

(74) Vertreter: **Kaiser, Dieter Ralf, Dipl.-Ing.**
**Gundelhardtstrasse 72**
**W-6233 Kelkheim/Ts.(DE)**

## Beschreibung

Bei Erfindung betrifft ein bei hoher Temperatur entladbares Primärelement, bestehend aus einer positiven Silberoxid- oder Braunsteinelektrode, einer negativen Cadmiumelektrode und einem alkalischen Elektrolyten in einem Metallgehäuse vom Rundzellentyp.

Aus der FR-PS 1063 338 ist beispielsweise ein alkalischer Akkumulator bekannt, der eine negative Cadmiumelektrode und eine positive Silberoxidelektrode besitzt.

Der DE-OS 3337570 ist ein Primärelement der eingangs genannten Gattung zu entnehmen. Derartige Rundzellen, vorzugsweise auf der Grundlage des leistungsstarken alkalischen Silberoxid/Zink-Systems, werden insbesondere für Sonden und Hilfseinrichtungen bei der Exploration von Bodenschätzen benötigt. Da zu deren Suche und Förderung immer tiefere Erdschichten erschlossen werden müssen, wird die dort herrschende Temperatur zum wichtigsten Belastungsfaktor, der über Möglichkeiten eines Batterieeinsatzes entscheidet. Eine gute Voraussetzung dafür, daß beispielsweise Braunstein-Zellen auch noch bei Temperaturen oberhalb 100°C hinreichend funktionsfähig bleiben, wurde bereits durch die Einführung der Kalilauge anstelle des Leclanché-Elektrolyten bei der konventionellen Primärelemente geschaffen. Ein weiterer Schritt mit dem Ziel, den mit der hohen Temperatur wiederum einhergehenden korrosiven Angriff des Laugeelektrolyten auf die Innenbestandteile der Zelle abzuschwächen, konzentrierte sich gemäß der erwähnten DE-OS auf die Auswahl von widerstandsfähigeren Materialien für den Separator, wobei sich eine Kombination zwischen einem Keramikpapier und einer Ionenaustauschermembran als sehr zweckmäßig herausgestellt hat.

Indessen stoßen sowohl Alkali-Mangan als auch Silberoxid-Rundzellen mit negativen Zinkelektroden trotz Ausstattung mit weitgehend inerten Scheidern bei etwa 160°C an eine Grenze ihrer Einsatzfähigkeit. Der Grund liegt jedoch weniger in Qualitätsmängeln bei den elektrochemisch inaktiven Zellkomponenten, sondern er wurde aufgrund von Explosionen, von denen eine Anzahl Zellen während eines Lagerungstests bei 160°C bereits am 3. Tag betroffen war, in einer starken Gasentwicklung der Zinkelektroden erkannt, welche daher rührt, daß die Wasserstoffüberspannung am Zink durch steigende Temperatur vermindert wird, was sich in einer exponentiell ansteigenden Gasungsrate äußert.

M.G. Klein und M. Eisenberg (Electrochemical Technology, Vol3, Nr.1-2, Jan.-Febr. 1965, S. 58-60) berichten über eine alkalische Quecksilberoxid/Cadmium-Batterie und erwähnen einen Lagerungstest bei 73,8°C, den diese Batterie ohne nennenswerte Kapazitätseinbußen überstanden hat.

Der Erfindung liegt somit die Aufgabe zugrunde, ein alkalisches Primärelement unter Anknüpfung an das sonst bewährte Konstruktionsprinzip der Rundzelle mit außen angeordneter positiver Elektrode so zu modifizieren, daß sein zuverlässiger Gebrauch auch noch in dem erwähnten Temperaturgebiet und ohne die gefährliche Gasungsneigung möglich ist.

Die Aufgabe wird erfindungsgemäß mit den im Anspruch 1 angegebenen Mitteln gelöst. Danach hat sich eine konzentrische Elektrodenkonfiguration als günstig herausgestellt, die aus einem äußeren Ringzylinder besteht, welcher die positiv Elektrode bildet und aus Silberoxid-oder Braunstein-Pulverpreßlingen zusammengesetzt ist, und deren Innenraum unter Zwischenlage eines Separators von einer Cadmiumelektrode in der Form eines Rundwickels ausgefüllt ist.

Mit besonderem Vorteil wird erfindungsgemäß eine Cadmiumelektrode verwendet, die man nach einem aus der DE-OS 28 22 821 bekannten Verfahren durch kathodische Metallabscheidung aus Cadmiumsalzlösungen auf einem Trägermetallband erhalten kann und die deshalb auch als Elektrodeposit-Elektrode bezeichnet wird.

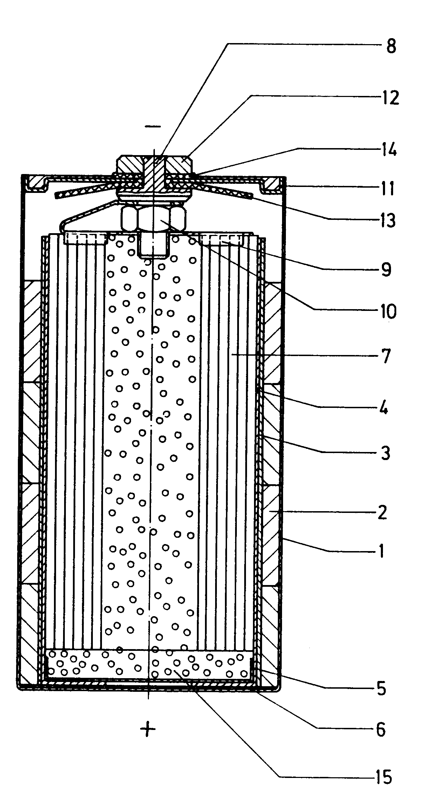

Die Figur zeigt den Gesamtaufbau des erfindungsgemäßen Primärelements. In den Metallgehäusebecher 1 sind als positive Elektrode die Kathodenringe 2 aus gepreßtem Silberoxid- und/oder Braunsteinpulver, welches gegebenenfalls Leitmaterial wie z.B. Kohlenstoff enthält, röhrenförmig eingepreßt. An den Kathodenringen liegt ein ein- oder mehrlagiger Separator aus dünnen Folien und/oder Vliesschichten an, der vorzugsweise jedoch aus einem außenliegenden PTFE-Gitter und einer innenliegenden als Hülse geformten Ionenaustauschermembran 4 besteht, wobei der Boden der Hülse durch eine Isoliereinlage 5 aus PTFE verstärkt ist.

Als Ionenaustauschermembran haben sich unter dem Handelsnamen "PERMION"® der RAI Research Corp. erhältliche Filme auf der Grundlage von strahlenvernetztem Polyäthylen besonders bewährt. Es können jedoch auch andere Separatoren eingesetzt werden, sofern sie den hier aktuellen hohen Temperaturanforderungen genügen.

Eine weitere Isolierscheibe 6 separiert die Zelleneinbauten insgesamt von dem metallischen Boden des Gehäusebechers 1. Das Zelleninnere wird im wesentlichen von der als Rundwickel ausgebildeten Cadmiumelektrode 7 eingenommen, wobei das dem Wickel zugrundeliegende Trägermetallband aus Nickel, einem Nickelstahl, Silber oder auch Kupfer besteht.

Als negativer Ableiter dient ein Stift 8, vorzugsweise aus Edelstahl, der mit einer Kontaktscheibe 9 mittels Mutter 10 verschraubt, ggfs. auch verschweißt oder vernietet ist. Die Kontaktscheibe 9 ist andererseits mit dem Rundwickel 7 verschweißt. Der Ableiter 8 führt durch die Öffnung des metallischen Abschlußdeckels 11 und bildet auf dessen Oberseite zusammen mit dem Nietring 12 den negativen Zellenpol. Damit er jedoch zum Abschlußdeckel keinen Kontakt bekommt, ist unter- und oberhalb des Abschlußdeckels 11 jeweils eine Dichtungs- (13) bzw. Isolierscheibe 14, vorzugsweise aus PTFE oder einem anderen lauge- und hochtemperaturbeständigen Kunststoff, z.B. Polyetherketon, gelegt.

Als Elektrolyt 15 dient eine wässrige Kalilauge. Der Abschlußdeckel 11 ist mit dem Gehäusebecher 1 durch Laserverschweißung hermetisch dicht verbunden.

Ein solches Primärelement gemäß der Erfindung kann selbst bei extrem hohen Temperaturen (bis 200°C und darüber) eingesetzt werden und erfüllt die gestellte Aufgabe, weil seine negative Elektrode unter den genannten Bedingungen keinen Wasserstoff entwickelt. Der Innendruck der Zelle wird im wesentlichen durch den Dampfdruck des Elektrolyten (ca. 6 bar bei 200°C) bestimmt.

Der Vorteil dieser Zelle im Vergleich zu herkömmlichen alkalischen Rundzellen der Systeme $Ag_2O/Zn$ oder $MnO_2/Zn$ liegt somit auf der Hand.

In Lagerungstests hat sich gezeigt, daß erfindungsgemäße Zellen Lagerzeiten bei 200°C über 6 Wochen hinaus ohne Verlust ihrer Funktionsfähigkeit überstehen. Dagegen muß bei handelsüblichen alkalischen Hochtemperaturzellen vom $Ag_2O/Zn$-Typ bereits nach einem 5tägigen Einsatz bei nur 163°C mit einem Bersten gerechnet werden, weil die entwickelte Wasserstoffmenge dann ein unzuträgliches Ausmaß erreicht.

**Patentansprüche**

1. Bei hoher Temperatur entladbares galvanisches Primärelement, bestehend aus einer positiven Silberoxid- oder Braunsteinelektrode, einer negativen Cadmiumelektrode und einem alkalischen Elektrolyten in einem Metallgehäuse vom Rundzellentyp, dadurch gekennzeichnet, daß das Metallgehäuse in konzentrischer Anordnung die positive Elektrode in Form eines aus Pulverpreßlingen zusammengesetzten äußeren Ringzylinders und die negative Elektrode in der Form eines inneren Rundwickels mit zwischenliegendem Separator enthält, und daß das Element bei Temperaturen oberhalb von 160°C entladbar ist.

2. Primärelement nach Anspruch 1, dadurch gekennzeichnet, daß die Cadmiumelektrode eine durch kathodische Metallabscheidung aus Cadmiumsalzlösungen auf einem Trägermetallband erzeugte Elektrodeposit-Elektrode ist.

3. Primärelement nach Anspruch 2, dadurch gekennzeichnet, daß das Trägermetallband aus Nickel oder einem Nickelstahl besteht.

4. Primärelement nach einem der Ansprüche 1 bis 3, dadurch gekennzeichnet, daß der Separator aus mindestens zwei Schichten gebildet ist, von denen die äußere aus einem PTFE-Gitter (3) und die innere aus einer Ionenaustauschermembran (4) besteht.

5. Primärelement nach Anspruch 4, dadurch gekennzeichnet, daß die Ionenaustauschermembran als Hülse mit einer Isoliereinlage (5) aus PTFE ausgebildet ist.

6. Primärelement nach den Ansprüchen 1 bis 5, dadurch gekennzeichnet, daß der Gehäusebecher (1) des Metallgehäuses mit einem Abschlußdeckel (11) laserverschweißt ist.

**Claims**

1. Galvanic primary cell which may be discharged at high temperature, comprising a positive silver oxide or manganese dioxide electrode, a negative cadmium electrode and an alkaline electrolyte in a metal casing of the round cell type, characterized in that the metal casing contains, in concentric arrangement, the positive electrode in the form of an outer annular cylinder composed of compressed powder articles and the negative electrode in the form of an inner round winding having an interposed separator, and in that the cell may be discharged at temperatures above 160°C.

2. Primary cell according to Claim 1, characterized in that the cadmium electrode is an electro-deposited electrode produced by cathodic metal deposition from cadmium salt solutions on a metal carrier band.

3. Primary cell according to Claim 2, characterized in that the metal carrier band comprises nickel or a nickel steel.

4. Primary cell according to one of Claims 1 to 3, characterized in that the separator is formed from at least two layers, the outer one of which comprises a PTFE grid (3) and the inner one of which comprises an ion exchange diaphragm (4).

5. Primary cell according to Claim 4, characterized in that the ion exchange diaphragm is constructed as a sleeve with an insulating insert (5) made of PTFE.

6.  Primary cell according to Claims 1 to 5, characterized in that the casing cup (1) of the metal casing is laser-welded to a sealing cover (11).

**Revendications**

1.  Elément galvanique primaire susceptible d'être déchargé à température élevée, constitué par une électrode positive d'oxyde d'argent ou bien de bioxyde de manganèse, une électrode négative de cadmium et un électrolyte alcalin dans un boîtier métallique du type élément rond, élément galvanique caractérisé en ce que le boîtier contient, suivant une disposition concentrique, l'électrode positive sous la forme d'un cylindre externe composé de pièces en poudre comprimée et, avec interposition d'un séparateur, l'électrode négative sous la forme d'un enroulement interne rond, et en ce que cet élément est susceptible d'être déchargé à des températures supérieures à 160° C.

2.  Elément primaire selon la revendication 1, caractérisé en ce que l'électrode de cadmium est une électrode électro déposée par dépôt cathodique de métal à partir de solution de sels de cadmium sur une bande porteuse en métal.

3.  Elément primaire selon la revendication 2, caractérisé en ce que la bande porteuse en métal est constituée par du nickel ou un acier au nickel.

4.  Elément primaire selon une des revendication 1 à 3, caractérisé en ce que le séparateur est constitué d'au moins deux couches, la couche externe étant constituée par une grille en PTFE (3), tandis que la couche interne est constituée par une membrane échangeuse d'ions (4).

5.  Elément primaire selon la revendication 4, caractérisé en ce que la membrane échangeuse d'ions est réalisée sous la forme d'une douille avec une garniture isolante (5) en PTFE.

6.  Elément primaire selon les revendications 1 à 5, caractérisé en ce que le boîtier (1) est soudé au laser avec un couvercle de fermeture (11).